# FASCICULE DE BREVET EUROPEEN

(11) **EP 4 590 584 B1**
(45) Date de publication et mention de la délivrance du brevet: **04.02.2026**
(21) Numéro de dépôt: 23790719.1
(22) Date de dépôt: 19.09.2023
(51) Int. Cl.: B64G 1/64

(54) **EMPILEMENT D'ENGINS SPATIAUX**
RAUMFAHRZEUGSTAPEL
SPACECRAFT STACK

(30) Priorité: 20.09.2022 FR 2209505
(43) Date de publication de la demande: 30.07.2025
(73) Titulaire: Airbus Defence and Space SAS, 31402 Toulouse Cedex 4 (FR)
(72) Inventeur: SIMON, Coraline, 31402 TOULOUSE Cedex 04 (FR); DELTOUR, Bernard, 31402 TOULOUSE Cedex 04 (FR)
(74) Mandataire: Santarelli
(86) Numéro de dépôt international: PCT/FR2023/051421
(87) Numéro de publication internationale: WO 2024/062185

(56) Documents cités:
- CN-A- 113 581 499
- CN-B- 112 078 835
- US-A- 6 138 951
- US-A1- 2016 318 635
- US-A1- 2021 139 170

## Description

### ART ANTERIEUR

La présente demande concerne le domaine des engins spatiaux, et plus particulièrement mais non limitativement, le domaine des satellites destinés à être mis en orbite autour de la Terre.

Classiquement, un satellite est mis en orbite au moyen d'un lanceur, lequel amène le satellite dans l'espace pour le larguer à l'orbite prévue.

Afin de réduire les coûts liés au lancement de satellite, il est connu de lancer les satellites par grappe, c'est-à-dire de placer dans un même lanceur plusieurs satellites qui seront largués au cours d'un même lancement. Cette pratique permet une réduction considérable des coûts.

Lorsque plusieurs satellites sont placés dans un même lanceur, le problème se pose de la gestion des efforts au lancement. La phase de lancement génère une poussée et des vibrations qui, si les satellites étaient simplement empilés les uns sur les autres, risqueraient d'endommager les satellites et les équipements qu'ils portent, en particulier ceux situés en partie basse de la pile.

Pour minimiser les efforts que subissent les satellites au décollage (poussée et vibrations) et lors de l'ascension (où la poussée demeure), il est connu de prévoir une structure support, connue sous le nom de « *dispenser* » en anglais parfois francisée en « dispenseur ». EP1104743 décrit un dispenseur à deux étages en porte-à-faux. Ce dispenseur comprend un pilier central qui supporte l'ensemble du poids des satellites, une plateforme inférieure qui est portée par le pilier central et qui accueille un premier sous-ensemble de satellites, et une plateforme supérieure qui est portée par le pilier central et qui accueille un second sous-ensemble de satellites. Les satellites de la plateforme supérieure ne reposent pas sur ceux de la plateforme inférieure.

Les dispenseurs présentent l'inconvénient d'être spécialement adaptés au type de satellite à envoyer. Ainsi, la conception des dispenseurs dépend de leur utilisation. Il peut en outre arriver que plusieurs satellites de conception différente doivent être largués par un même lanceur, complexifiant la structure du dispenseur dans le lanceur. La répartition du poids dans le lanceur doit également être surveillée, notamment lors du largage. En effet, afin de conserver l'équilibre du lanceur une fois lancé, la séquence de largage des satellites doit respecter à tout moment une répartition du poids adéquate au sein du lanceur. Les opérations de largage s'en trouvent complexifiées.

Un autre inconvénient des dispenseurs est que la forme et les dimensions des satellites sont limitées par la place laissée par le dispenseur. Une telle structure présente aussi l'inconvénient majeur d'alourdir la masse du lanceur et donc de limiter la masse totale des satellites pouvant être lancés (« *payload* »).

Pour toutes ses raisons, il a été proposé de supprimer les dispenseurs et d'empiler directement les satellites les uns sur les autres en prévoyant, sur la structure de chaque satellite, une interface dédiée pour l'empilement. Dans un tel empilement, les corps des satellites ne sont pas en contact direct les uns aux autres ; les satellites sont au contraire reliés entre eux par l'intermédiaire de l'interface dédiée.

Ces techniques d'empilement sont essentiellement utilisées pour empiler des satellites identiques. Dans toute la description l'expression « empilement de satellites » désigne un assemblage fait de satellites qui sont tous identiques sauf mention contraire.

Par ailleurs, tout empilement de satellites (qu'il s'agisse d'un empilement antérieur connu ou d'un empilement selon l'invention) est ici décrit avec un axe d'empilement considéré comme vertical. Une « face horizontale », respectivement « face verticale », d'un satellite désigne donc une face du satellite qui est orthogonale, respectivement parallèle, à l'axe d'empilement lorsque le satellite est empilé, ce qui ne signifie pas nécessairement que cette face est aussi orthogonale, respectivement parallèle, à l'axe Terre-satellite lorsque le satellite est en orbite.

Un satellite comprend usuellement une face Terre destinée à être orientée vers la Terre lorsque le satellite est en orbite, une face anti-Terre opposée, qui ne « voit » pas la Terre, et des faces latérales usuellement orthogonales aux faces Terre et anti-Terre, parfois appelées faces nord, sud, est et ouest en référence aux points cardinaux (dans le cas d'un satellite de section carrée, qui comprend donc quatre faces latérales). L'expression « plateforme Terre » désigne la structure (généralement un panneau) qui porte les équipements destinés à être en regard de la Terre (antennes de communication, caméras d'observation de la Terre, etc.).

US 2016/0318635 décrit des satellites empilables comprenant chacun un cadre structural périphérique et des panneaux horizontaux. Des poteaux, correspondant à l'interface dédiée susmentionnée, sont fixés aux angles du cadre structural. Ces poteaux dépassent généralement des panneaux horizontaux selon une direction longitudinale normale auxdits panneaux ; ils présentent une extrémité supérieure et une extrémité inférieure ayant des formes complémentaires permettant d'emboîter l'extrémité inférieure d'un poteau d'un premier satellite dans l'extrémité supérieure d'un poteau d'un deuxième satellite situé en dessous du premier. Les poteaux des satellites empilés les uns sur les autres forment ainsi des piles de poteaux. Une structure de compression comprenant un arbre central (qui n'a pas pour fonction de reprendre les efforts des satellites) est prévue pour appliquer un effort de compression sur les piles de poteaux afin que les poteaux des satellites restent correctement emboîtés les uns dans les autres. Une telle structure de compression peut être prévue plus légère et moins encombrante qu'un dispenseur classique, ce qui permet d'augmenter la masse ou le nombre de satellites embarqués pour un même *payload* et de réduire les coûts de lancement par satellite. Pour larguer les satellites, le carénage entourant l'empilement de satellites et au moins une partie de la structure de compression sont éjectés ensemble. Les satellites peuvent alors se dissocier.

EP3259190 propose aussi un satellite doté de poteaux pour pouvoir former un empilement avec d'autres satellites. Ce satellite comprend : un module porte-équipement, destiné à supporter les équipements du satellite ; trois poteaux (si les satellites présentent une section triangulaire) ou quatre poteaux (si le satellites présentent une section rectangulaire) s'étendant longitudinalement et à la périphérie du module porte-équipement, chaque poteau étant muni, à chacune de ses extrémités, d'un dispositif de verrouillage libérable pouvant être soit verrouillé, état dans lequel il est fixé à un dispositif de verrouillage complémentaire, soit déverrouillé, état dans lequel il est libéré de tout autre dispositif de verrouillage ; et une structure de renfort reliant rigidement transversalement chaque poteau à au moins deux autres poteaux. Les satellites peuvent être largués individuellement ou par groupe, en déverrouillant spécifiquement les dispositifs de verrouillage qui maintiennent ledit satellite ou ledit groupe aux satellites restants dans le lanceur.

Là encore, les piles de poteaux nécessitent d'être précontraintes pour que la tenue mécanique de l'empilement de satellites soit assurée.

Avec de tels satellites, il est connu de former des empilements comprenant un satellite par étage (comme illustré dans EP3259190), ce qui limite le nombre de satellites pouvant être embarqués à bord d'un même lanceur.

Si les dimensions relatives des satellites et du lanceur le permettent, il est aussi connu de former des piles comprenant deux satellites (de section rectangulaires) par étage. L'empilement de satellites forme alors deux tours de satellites qu'il est nécessaire de lier l'une à l'autre.

La tenue mécanique d'un empilement à deux satellites par étages est moindre en comparaison d'une configuration avec dispenseur. En particulier, cet empilement présente un premier mode propre vibratoire de fréquence relativement basse, qui pose problème compte tenu des accélérations et fréquences que l'empilement doit pouvoir supporter au décollage.

Par ailleurs, plus le nombre de satellites est élevé et plus l'empilement est instable. De même, plus la hauteur de l'empilement est grande et plus l'empilement est instable. Ainsi pour lancer ensemble un grand nombre de satellites (le nombre de satellites à lancer est fixé par la mission), il y a lieu de prévoir des satellites de hauteur réduite.

CN 113581499 divulgue un dispositif de verrouillage et de séparation de satellites agencés dans un empilement comprenant quatre satellites par étages, les satellites comportant des tronçons de poteaux s'étendant sur une moitié de la hauteur du satellite.

US2021/139170 divulgue un dispositif d'appariement et de libération de satellites agencés dans un empilement comprenant plusieurs satellites par étages. A l'instar d'un dispenseur, les organes d'appariement de ce dispositif occupent un espace central entre les satellites, qui réduit le volume disponible pour les satellites eux-mêmes.

L'invention vise à résoudre au moins l'un des problèmes susmentionnés posés par les piles de satellites connues.

En particulier, un objectif de l'invention est de proposer un empilement d'engins spatiaux ayant une tenue mécanique améliorée malgré une précontrainte inférieure et/ou plus simple à mettre en œuvre. L'invention vise également à proposer un engin spatial permettant d'obtenir de tels empilements. Un autre objectif de l'invention est de proposer des engins spatiaux à empiler et des empilements dont la configuration permet d'optimiser l'utilisation du volume sous coiffe disponible dans le lanceur. Un autre objectif de l'invention est de proposer un engin spatial permettant de former des empilements de configurations différentes, afin de pouvoir lancer un nombre différent d'engins selon le lanceur utilisé et/ou selon la mission.

### EXPOSE DE L'INVENTION

Pour ce faire, l'invention propose un empilement d'engins spatiaux destiné à être intégré dans un lanceur, l'empilement comprenant :
- une pile d'engins spatiaux formée d'une pluralité d'étages superposés selon une direction longitudinale, dont un premier étage, un dernier étage et un ou plusieurs étages intermédiaires, chacun des étages comprenant un nombre d'engins spatiaux supérieur ou égal à N, les engins spatiaux de chacun des étages étant directement empilés sur les engins spatiaux de l'étage précédant,
- un adaptateur inférieur adapté pour former une interface entre la pile d'engins spatiaux et le lanceur, les engins spatiaux du premier étage de la pile étant agencés sur cet adaptateur inférieur,
- un système de précontrainte configuré pour exercer une précontrainte longitudinale sur la pile d'engins spatiaux,
- chacun des engins spatiaux comprenant
   - une structure-support, comprenant des panneaux,
   - trois piliers d'empilement ayant chacun un axe s'étendant selon la direction longitudinale et disposés à la périphérie de la structure-support, les engins spatiaux étant agencés dans la pile de façon à ce que leurs piliers d'empilement forment des lignes de piliers s'étendant de façon continue du premier au dernier étage de la pile,

L'empilement selon l'invention est caractérisé en ce que, pour chacun des engins spatiaux de l'empilement :
- le cylindre circulaire qui passe par les axes des trois piliers d'empilement dudit engin spatial présente un diamètre d_{N} qui est le même pour tous les engins spatiaux de l'empilement ; il est à noter en effet, que par trois axes parallèles il passe toujours un et un seul cylindre de section circulaire. Ce cylindre, qui est propre à chacun des engins spatiaux présente un diamètre d_{N} qui, selon une caractéristique de l'invention, est le même (c'est-à-dire qu'il fait la même dimension) pour tous les engins spatiaux. On verra plus loin que, dans une configuration à N engins spatiaux par étages, les cylindres d_{N} de tous les engins spatiaux sont confondus, c'est-à-dire que tous les piliers d'empilement des engins spatiaux se retrouvent situés sur un même cylindre (de diamètre d_{N}) dans l'empilement,
- ledit engin spatial est dépourvu de piliers d'empilement à l'intérieur de ce cylindre de diamètre d_{N}, ledit engin spatial s'inscrivant par ailleurs dans un secteur angulaire dudit cylindre de diamètre d_{N} d'angle égal à 360°/N,
- les piliers d'empilement dudit engin spatial comprennent :
   - un premier demi-poteau d'extrémité et un second demi-poteau d'extrémité, espacés de 360°/N l'un de l'autre dans un repère centré sur l'axe du cylindre de diamètre d_{N}, chacun des premier et second demi-poteaux d'extrémité ayant une hauteur (dimension selon la direction longitudinale) supérieure ou égale à celle de la structure support et des sections transversales incomplètes (ouvertes) et complémentaires telles qu'elles permettent l'assemblage du premier demi-poteau dudit engin spatial avec le second demi-poteau d'un autre des engins spatiaux situé sur le même étage que ledit engin spatial, pour former un poteau complet ci-après dit poteau partagé ; la caractéristique précédente étant vérifiée pour tous les engins spatiaux, les sections transversales incomplètes et complémentaires des premier et second demi-poteaux des engins spatiaux permettent aussi par conséquent l'assemblage du second demi-poteau dudit engin spatial avec le premier demi-poteau d'un autre des engins spatiaux situé sur le même étage ; à noter que les termes « incomplètes » (ou ouvertes) et « complémentaires » qualifiant les sections transversales des demi-poteaux signifient simplement que ces sections sont configurées pour venir s'emboîter transversalement (c'est-à-dire selon au moins une direction orthogonale à la direction longitudinale d'empilement) l'une dans l'autre ou l'une contre l'autre pour permettre l'assemblage des demi-poteaux d'extrémités et former un poteau partagé ;
   - un poteau complet, dit poteau intermédiaire, situé entre les premier et second demi-poteaux d'extrémité ,
- ledit engin spatial comprend un dispositif d'accouplement permettant d'accoupler l'un des premier et second demi-poteaux d'extrémité (30) dudit engin spatial avec l'autre des premier et second demi-poteaux d'extrémité d'un autre des engins spatiaux de l'empilement pour former un poteau partagé.

Selon une caractéristique possible de l'invention, pour chacun des engins spatiaux :
- les premier et second demi-poteaux d'extrémité présentent des sections transversales respectives en arcs de cercle ouvertes vers l'extérieur de la structure-support, de sorte que les poteaux partagés présentent eux aussi une section transversale en forme d'arc de cercle,
Selon une caractéristique possible de l'invention, dans le cas où les demi-poteaux d'extrémité des engins spatiaux présentent des sections transversales en arcs de cercle, le dispositif d'accouplement comprend :
- une bague de section circulaire recevant une extrémité inférieure ou supérieure des deux demi-poteaux d'extrémité accouplés, et
- un organe de liaison entre ladite bague et l'un desdits demi-poteaux d'extrémité, l'organe de liaison autorisant alternativement l'assemblage de l'extrémité supérieure ou inférieure des deux demi-poteaux d'extrémité avec la bague et la libération desdites extrémités hors de la bague, la bague restant constamment attachée audit demi-poteau par ledit organe de liaison.

Selon une caractéristique possible de l'invention, chacune des lignes de piliers est constituée soit uniquement de poteaux intermédiaires, soit uniquement de poteaux partagés, soit d'une alternance de poteaux intermédiaires et de poteaux partagés.

Selon une caractéristique possible de l'invention, la structure-support d'au moins un ou de chacun des engins spatiaux présente une section transversale en forme de losange.

Selon une caractéristique possible de l'invention, la structure-support d'au moins un ou de chacun des engins spatiaux comprend un mur extérieur de renfort entre le poteau intermédiaire et chacun des demi-poteaux d'extrémité, lesquels murs extérieurs de renfort présentent une hauteur inférieure à la hauteur desdits poteau et demi-poteaux.

Selon une caractéristique possible de l'invention, au moins un ou chacun des engins spatiaux présente un centre de gravité excentré, situé, selon une vue en coupe transversale, à l'intérieur d'un triangle dont les sommets correspondent aux axes des trois piliers d'empilement dudit engin spatial.

Selon une caractéristique possible de l'invention, les premier et second demi-poteaux d'extrémité des engins spatiaux de l'empilement présentent des sections transversales respectives telles que le poteau partagé, que forment le premier demi-poteau de l'un des engins spatiaux assemblé au second demi-poteau d'un autre des engins spatiaux dans une configuration d'empilement à N engins spatiaux par étage, présente une section transversale en forme d'arc de cercle laissant un secteur angulaire libre pour permettre aussi une configuration à N+1 engins spatiaux par étage. Il peut être prévu que le secteur angulaire libre soit suffisamment grand pour permettre aussi une configuration à N+2 engins spatiaux par étage.

Selon une caractéristique possible de l'invention, les premier et second demi-poteaux d'extrémité de chacun des engins spatiaux présentent une section en arc de cercle d'angle inférieur à 165°, ouverte vers l'extérieur de la structure-support.

Dans un mode de réalisation possible de l'invention, N est égal à 3 et l'empilement comprend trois engins spatiaux par étage.

En variante, N est égal à 3 et l'empilement comprend quatre engins spatiaux par étage.

### BREVE DESCRIPTION DES DESSINS

Dans toute la suite, par soucis de simplification, le terme « satellite » est utilisé pour désigner plus généralement un engin spatial quelconque.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 représente une vue schématique en perspective d'un assemblage de trois satellites selon un premier exemple de réalisation de l'invention, cet assemblage correspondant à un étage d'une configuration d'empilement à trois satellites par étage ;
[Fig. 2] la figure 2 est une vue de dessus de l'assemblage de satellites de la figure 1 ;
[Fig. 3] la figure 3 est un zoom en perspective sur la zone de jonction entre deux satellites de l'assemblage de la figure 1 ;
[Fig. 4] la figure 4 est une vue en perspective d'un empilement de satellites identiques à ceux des figures 1 à 3, dans une configuration d'empilement à trois satellites par étage (chaque étage correspondant donc à l'assemblage de la fig. 1), l'empilement comprenant ici huit étages ;
[Fig. 5] la figure 5 est une vue schématique simplifiée en perspective d'un satellite selon un second exemple de réalisation de l'invention ;
[Fig. 6] la figure 6 est une vue schématique d'un empilement de satellites identiques à ceux de la figure 5, dans une configuration d'empilement à trois satellites par étage (comme sur la fig. 4), l'empilement comprenant ici huit étages ;
[Fig. 7] la figure 7 représente une vue schématique en perspective d'un assemblage de quatre satellites identiques à ceux de la figure 1, cet assemblage correspondant à un étage d'une configuration d'empilement à quatre satellites par étage ;
[Fig. 8] la figure 8 est une vue de dessus de l'assemblage de satellites de la figure 7 ;
[Fig. 9] la figure 9 est un zoom en perspective sur la zone de jonction entre deux satellites de l'assemblage la figure 7 ;
[Fig. 10] la figure 10 est une vue schématique d'un empilement de satellites identiques à ceux de la figure 4, dans une configuration d'empilement à quatre satellites par étage (comme sur la fig. 7), l'empilement comprenant ici douze étages ;
[Fig. 11] la figure 11 est une vue en perspective d'un exemple de dispositif d'accouplement selon l'invention.

Les éléments identiques représentés sur les figures précitées sont identifiés par des références numériques identiques.

### DESCRIPTION DETAILLEE

Tout empilement selon l'invention comprend :
- une pile de satellites, formée d'étages superposés et comprenant un nombre N ou plus de satellites par étage, le nombre de satellites par étage étant identique d'un étage à l'autre ;
- un adaptateur 50,
- un système de précontrainte 60.

Les satellites peuvent être identiques mais ce n'est pas obligatoire. Ils peuvent en effet être pourvus d'équipements différents, voire même présenter des structures-supports différentes, dès lors qu'ils comprennent les trois piliers d'empilement 30-32 décrits plus loin.

Dans les figures annexées sont illustrés des exemples de réalisation de l'invention dans le cas où N=3. Des empilements comprenant trois (N) satellites par étage et quatre (N+1) satellites par étages y sont présentés. Par soucis de concision, seul le cas N=3 fait l'objet de dessins.

Bien entendu, l'invention n'est pas limitée à ces exemples. Ainsi par exemple, dans le cas où N=3, c'est-à-dire dans le cas où les satellites présentent des piliers d'extrémités séparés de 120° et sont dimensionnés pour s'inscrire dans un secteur angulaire de 120°, il est possible de réaliser des empilements comprenant plus de quatre satellites par étage (à condition de disposer d'un lanceur de plus grand diamètre). Par ailleurs, on peut aussi envisager le cas N=4, ou le cas N=5, etc. Dans le cas N=4, les satellites s'inscrivent dans un secteur angulaire de 90° et présentent des piliers d'extrémité distants de 90°. Ce cas permet, selon le diamètre du lanceur, d'une part des empilements comprenant quatre satellites par étages (il s'agit alors de la configuration d'empilement « minimale », qui correspond à celle dans laquelle le volume sous coiffe est le plus exploité) et d'autre part des empilements à plus de quatre (par exemple cinq) satellites par étages.

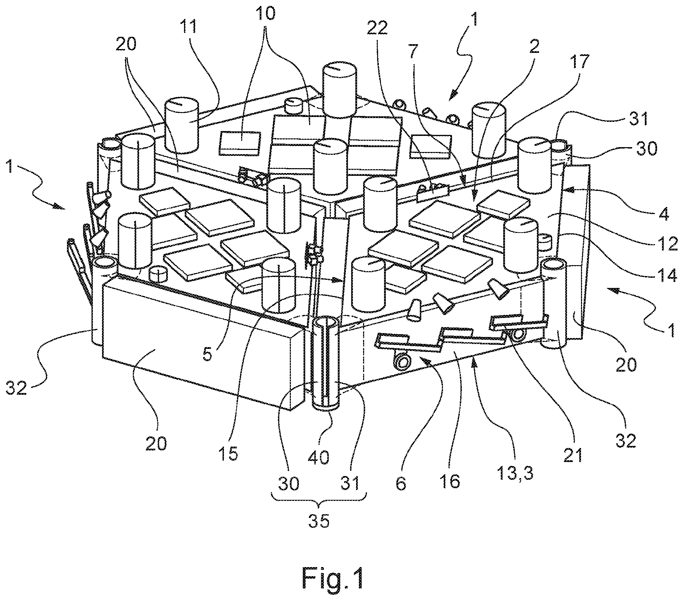

La figure 1 représente un assemblage de trois satellites 1 identiques selon un premier exemple de réalisation de l'invention.

De façon usuelle, le satellite 1 présente une face Terre 2 destinée à être orientée vers la Terre lorsque le satellite est en orbite, une face anti-Terre 3 opposée qui ne « voit » pas la Terre, une face nord 4, une face sud 5, une face est 6 et une face ouest 7.

La face Terre 2 reçoit des équipements qui doivent être orientés vers la Terre comme par exemple des antennes 10, des liaisons optiques 11, etc.

D'autres équipements peuvent être prévus sur les autres faces. Ainsi par exemple, les faces nord et sud sont typiquement pourvues de panneaux solaires déployables 20, qui sont repliés contre lesdites faces lorsque le satellite est en position d'empilement dans un lanceur. D'autres équipements 21, 22 peuvent être prévus sur les faces est et ouest 6, 7 du satellite. Enfin, divers systèmes et équipements (non représentés) sont aussi généralement logés à l'intérieur du parallélogramme délimité par les faces 2 à 7 du satellite.

Si l'on observe maintenant le satellite 1 dans une position d'empilement (comme c'est le cas sur toutes les figures annexées), celui-ci comprend une structure-support qui comprend notamment un panneau horizontal supérieur 12, un panneau horizontal inférieur 13 et quatre panneaux verticaux latéraux 14 à 17.

Dans les exemples illustrés, la face Terre 2 du satellite correspond à la face supérieure (ou face extérieure) du panneau horizontal supérieur 12 du satellite, la face anti-Terre 3 correspond à la face horizontale inférieure (ou face extérieure) du panneau horizontal inférieur 13, les autres faces 4 à 7 correspondant aux faces extérieures des panneaux verticaux latéraux 14 à 17 de la structure-support du satellite.

L'invention permet de choisir comme face Terre l'une des faces horizontales du satellite, dont la superficie est plus grande que celle des faces latérales, ce qui permet d'agencer un plus grand nombre d'équipements sur la face Terre et/ ou de réduire la hauteur du satellite (les faces latérales n'ayant pas à accueillir les équipements traditionnellement présents sur la face Terre, contrairement à ce qui est prévu dans EP 3259190). La réduction de la hauteur du satellite permet de plus d'améliorer la stabilité de l'empilement (à nombre de satellites identique) et/ou d'augmenter le nombre de satellites pouvant être embarqués.

A l'inverse, si une surface importante de panneau solaire est requise et que le satellite dispose d'un nombre relativement faible d'équipements côté Terre, il peut être préférable d'équiper les faces horizontales du satellite des panneaux solaires 20 et d'utiliser l'un des panneaux verticaux latéraux 14 à 17 comme plateforme Terre.

La face Terre étant ici une face horizontale du satellite, la face anti-Terre 3, non visible sur les figures, est située suffisamment en retrait, selon la direction longitudinale, des extrémités inférieures 37 des piliers d'empilement 30 à 32 décrits plus loin et en retrait du bord inférieur des panneaux 14 à 17, afin de pouvoir accueillir, lorsque les satellites sont empilés les uns sur les autres, les équipements 10 et 11 de la face Terre 2 du satellite situé en dessous, si ces équipements s'étendent au-delà des extrémités supérieures 36 desdits piliers d'empilement et/ou au-delà du bord supérieur des panneaux 14 à 17.

Dans l'exemple illustré, la structure-support du satellite 1 présente une forme parallélépipédique dont la section transversale (section selon un plan orthogonal à une direction longitudinale qui correspond à la verticale lorsque le satellite est observé en position d'empilement) est un losange ayant un angle en C de l'ordre de 120°.

En variante, la structure-support pourrait présenter un angle en C supérieur, par exemple compris entre 120° et 180° pour libérer de la place au centre de l'empilement si nécessaire pour des équipements de satellite externes à ladite structure-support. Ainsi par exemple, les satellites pourraient avoir une structure-support de section triangulaire (angle en C de 180°) comportant un panneau droit entre les piliers 30 et 31 décrits ci-après.

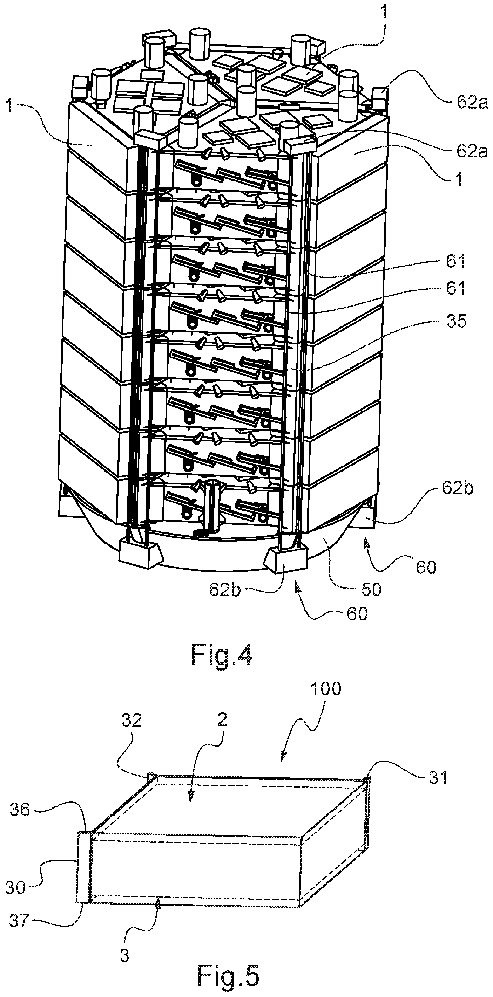

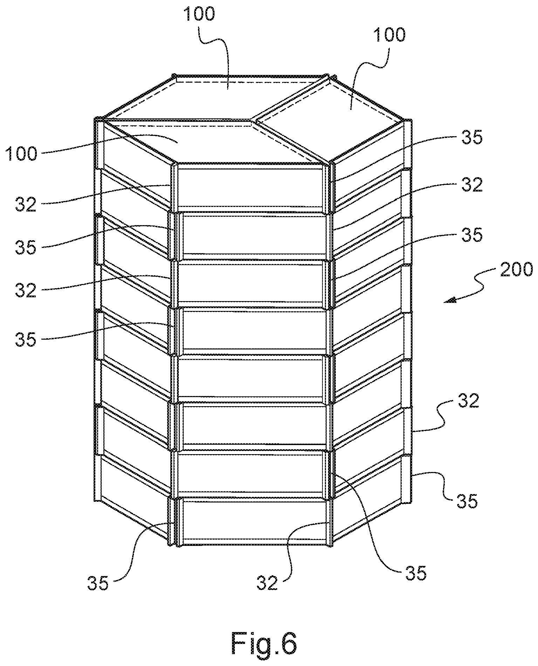

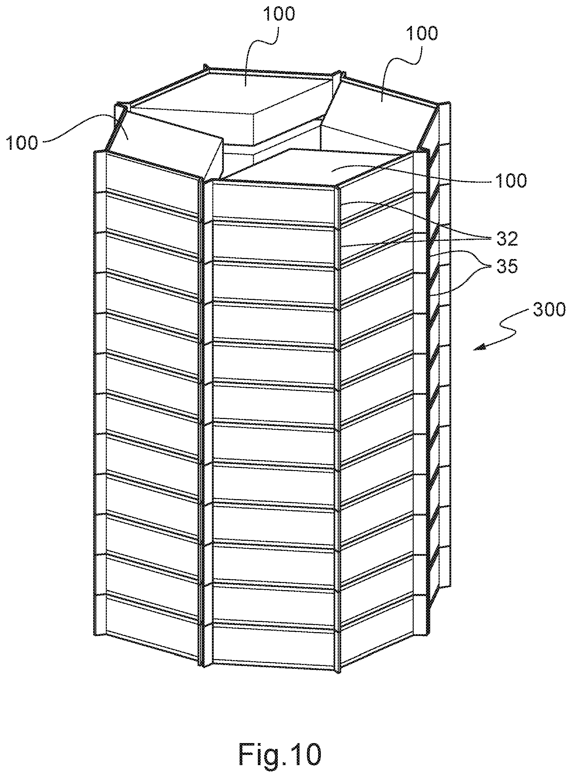

Selon l'invention, le satellite comprend trois piliers d'empilement 30, 31 et 32 à la périphérie de la structure-support du satellite, permettant notamment de réaliser un empilement à trois satellites par étage (fig. 4 et 6) ou un empilement à quatre satellites par étage (fig. 10).

De façon plus générale, selon l'invention, le satellite comprend trois piliers d'empilement « externes », c'est-à-dire destinés à se retrouver à la périphérie (ou l'extérieur) de l'empilement, à l'instar des piliers 30-32. Ces piliers d'empilement sont configurés pour transmettre au lanceur les efforts subis par les satellites. Par ailleurs la structure-support est configurée pour permettre un empilement à N satellites ou plus par étage ; elle est en particulier configurée pour permettre à la fois un empilement à N satellites par étage et un empilement à N+1 satellites par étage.

Considérons le cylindre qui contient les axes des trois piliers d'empilement (par trois points il passe toujours un -et un seul- cercle) ; le diamètre de ce cylindre est noté d_{N}. Selon l'invention, les piliers d'extrémité 30 et 31 du satellite sont espacés d'un angle sensiblement égal à 360°/N sur ce cylindre de diamètre d_{N}, et le satellite est configuré pour s'inscrire à l'intérieur d'un secteur angulaire de ce cylindre d'angle 360°/N (secteur angulaire délimité par les deux piliers d'extrémité 30 et 31).

Dans les différents exemples illustrés où N=3, le satellite 1 comprend donc des piliers d'empilement d'extrémité 30 et 31 distants de 120° sur le cylindre de diamètre d_{N}, et il s'inscrit dans un secteur angulaire d'angle 120°, délimité par ces deux piliers d'extrémité 30, 31.

La structure-support du satellite est par exemple parallélépipédique, avec une section transversale en forme de losange, et les piliers d'empilement 30-32 sont situés à trois coins dudit losange. Selon l'invention, le quatrième coin de la structure-support est dépourvu de pilier d'empilement. Plus généralement, le satellite est dépourvu de pilier d'empilement « interne », c'est-à-dire destiné à se retrouver à l'intérieur de l'empilement.

Plus précisément dans les exemples illustrés, le satellite 1 comprend un premier pilier d'extrémité 30 situé à l'un, premier, des coins de la structure-support, un second pilier d'extrémité 31 situé à un second coin de la structure support, opposé au premier coin, et un pilier intermédiaire 32 situé à un troisième coin de la structure-support, entre les deux piliers d'extrémité 30 et 31 sur l'arc de cercle de diamètre d_{N}. Le coin de la structure support qui est dépourvu de pilier d'empilement est donc opposé au pilier intermédiaire 32.

Dans l'exemple illustré, les piliers d'empilement sont situés à l'extérieur (radialement) de la structure-support. L'axe qui correspond à l'intersection entre le plan parallèle au panneau 17 de la structure-support passant par l'axe du pilier d'extrémité 30 et le plan parallèle au panneau 15 de la structure support passant par l'axe du pilier d'extrémité 31, est noté C. Aucun pilier d'empilement n'est prévu en C.

Le plan contenant l'axe du premier pilier d'empilement d'extrémité 30 et l'axe du pilier d'empilement intermédiaire 32 correspond à l'une, première, des faces verticales latérales du satellite, en l'exemple la face nord 14 ; le plan contenant l'axe du pilier d'empilement intermédiaire 32 et l'axe du second pilier d'empilement d'extrémité 31 correspond à une seconde face latérale du satellite, adjacente à la première, ici la face Est 16. L'angle en C, c'est-à-dire l'angle entre le plan parallèle au panneau 17 passant par l'axe du pilier d'extrémité 30 et le plan parallèle au panneau 15 passant par l'axe du pilier d'extrémité 31, est ici de l'ordre de 120°. Comme expliqué plus haut, ceci n'est pas limitatif, l'angle en C pouvant être supérieur afin de libérer de la place au centre de l'empilement si nécessaire. Par contre, l'angle opposé de la structure-support, c'est-à-dire l'angle entre les panneaux verticaux latéraux 14 et 16, au niveau du pilier intermédiaire 32, est de l'ordre de 120° afin de permettre d'agencer trois ou quatre (ou éventuellement plus) satellites par étage selon des configurations optimisées.

Bien entendu, les piliers d'empilement 30 à 32 sont rigidement fixés à la structure support, c'est-à-dire aux panneaux 12 à 17.

Quelle que soit la configuration d'empilement considérée, les satellites sont agencés dans l'empilement de façon à ce que leurs piliers d'empilement 30-32 (et donc aussi les faces verticales latérales 4 et 6) soient situés à l'extérieur de l'empilement, le coin C du satellite dépourvu de pilier d'empilement se trouvant à l'intérieur de l'empilement. L'empilement est dépourvu de pilier ou autre structure de reprise des efforts des satellites à l'intérieur du volume délimité par les piliers d'empilement 30-32 des satellites c'est-à-dire à l'intérieur du cylindre de diamètre d_{N} ; en particulier, l'empilement est dépourvu de pile centrale, ce qui simplifie la procédure de précontrainte à appliquer à l'empilement.

Dans la configuration d'empilement à trois (N) satellites par étages (fig. 1 à 4 et 6), le coin C dépourvu de pilier d'empilement du satellite est situé sur l'axe central du cylindre circulaire de diamètre d_{N} passant par les axes des piliers d'empilement 30-32. Chaque satellite s'inscrit dans un secteur angulaire de 120° dudit cylindre et remplit tout l'espace disponible dans ce secteur. Aucune place n'est perdue entre les satellites, l'agencement est optimisé.

Le cylindre de diamètre d_{N} correspond au volume sous coiffe disponible, il s'agit donc d'un paramètre qui dépend du lanceur. Les satellites sont ensuite dimensionnés en fonction de ce paramètre. Dans le cas d'un lanceur de diamètre sous coiffe d_{N} mesurant de l'ordre de 4m, les satellites peuvent par exemple mesurer 2m de côté (dimension L1).

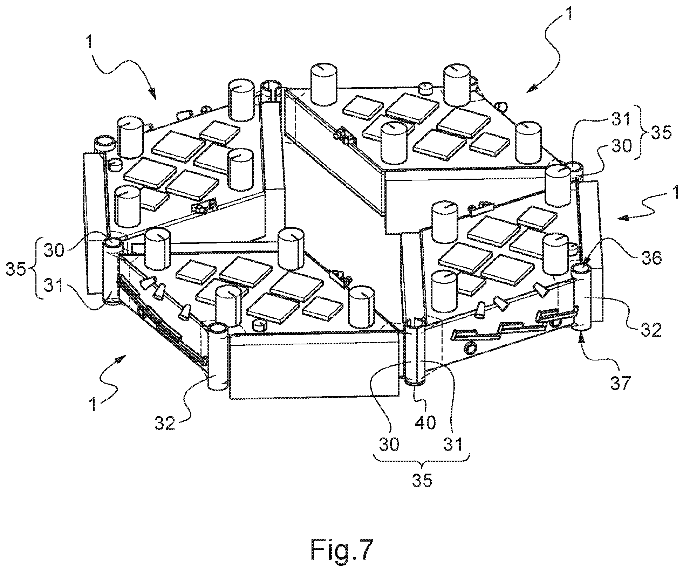

Dans la configuration d'empilement à quatre (N+1) satellites par étages (fig. 7 à 10), un volume perdu dont la section transversale a une forme d'étoile reste vide au centre de la pile. On notera de plus que dans cette configuration, les trois piliers d'empilement des satellites ne se retrouvent pas sur le même cylindre de section circulaire. Tous les piliers d'extrémité 30 et 31 sont situés sur un premier cylindre de diamètre L2, tandis que tous les piliers intermédiaires 32 sont situés sur un cylindre de diamètre L3. Avec des satellites dont les côtés L1 mesurent 2m, la distance L2 est de 5,2m et la distance L3 est de 5,8m. Un tel empilement à quatre satellites par étages est par exemple adapté à un lanceur dont le diamètre sous coiffe est de l'ordre de 6m.

Dans cette configuration, l'aménagement est moins optimisé mais cet inconvénient reste acceptable au regard des divers avantages que procurent la forme de la structure-support et l'agencement des piliers d'empilement du satellite selon l'invention. En outre, ce volume vide disponible peut être mis à profit pour loger des équipements du satellite qui peuvent être montés sur les faces 5 et 7 de celui-ci.

Parmi les avantages susmentionnés, on notera qu'un même design de satellite est compatible avec une configuration d'empilement à trois satellites par étage et avec une configuration d'empilement à quatre satellites par étage dans un lanceur de plus grand diamètre, moyennant, si nécessaire, une adaptation du design des piliers d'empilement du satellite en fonction des efforts subis au lancement. De façon plus générale, un même design de satellites permet de réaliser des empilements à N satellites par étage dans un lanceur de « petit » diamètre au moins égal à d_{N}, ainsi que des empilements à N+1, voire plus, satellites par étages dans un lanceur de plus grand diamètre.

De façon connue, les piliers d'empilement 30-32 peuvent être pourvus à leurs extrémités supérieure 36 et inférieure 37 de dispositifs de verrouillage-déverrouillage permettant de solidariser rigidement l'extrémité supérieure 36 d'un pilier avec l'extrémité inférieure 37 d'un pilier d'un satellite situé au-dessus, et de séparer les extrémités desdits piliers au moment du largage. Ce dispositif de verrouillage comprend par exemple par un lien électromagnétique, ou une fixation mécanique associée à un élément pyrotechnique apte à briser ladite fixation pour déverrouiller le verrouillage.

La figure 4 montre un second exemple de réalisation d'un satellite 100 selon l'invention. Cette figure est une représentation simplifiée sur laquelle seule la structure et les piliers d'empilement du satellite sont visibles, les équipements n'apparaissant pas. Le satellite 100 comprend une structure-support et trois piliers d'empilement 30-32 identiques ou similaires à ceux du satellite 1. Il comprend de plus un mur extérieur de renfort 33 s'étendant entre les piliers d'empilement 30 et 32 du satellite, et un mur extérieur de renfort 34 s'étendant entre les piliers d'empilement 32 et 31 du satellite.

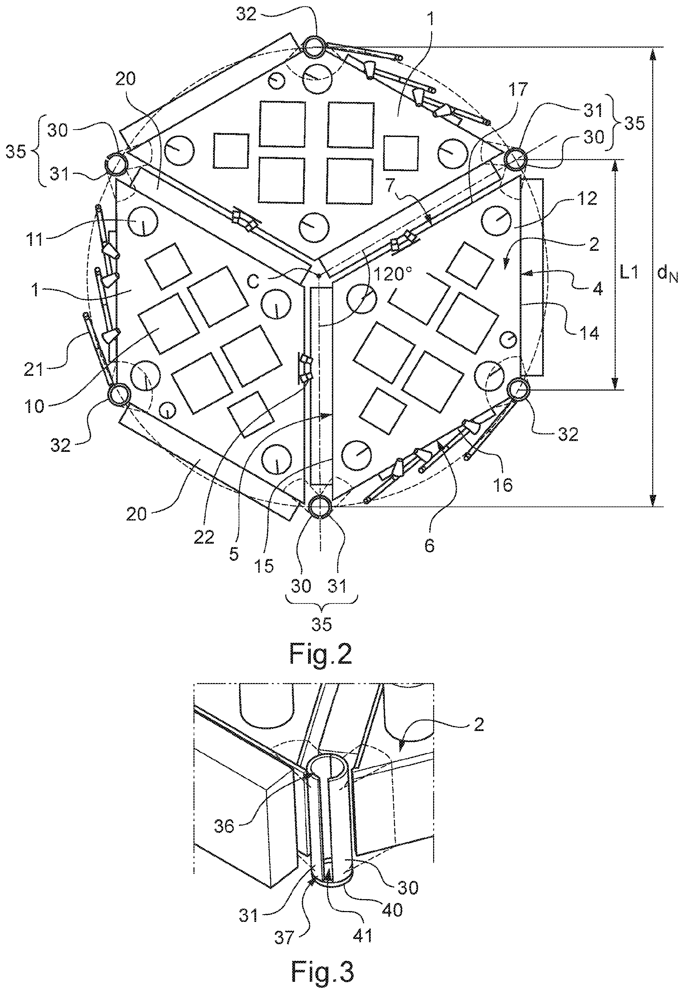

En réalité, quel que soit le mode de réalisation du satellite, les panneaux de la structure-support destinés à se retrouver à la périphérie de l'empilement, c'est-à-dire les panneaux 14 et 16 du mode de réalisation des figures 1 et 2, sont avantageusement plus épais, ou autrement renforcés, que ceux situés à l'intérieur de l'empilement (panneaux 15 et 17) afin d'optimiser la répartition de la masse du satellite.

Selon une caractéristique possible de l'invention, les engins spatiaux présentent un centre de gravité excentré, situé entre leurs trois piliers d'empilement (30-32). Cette caractéristique est intéressante en ce qu'elle permet de réduire la contrainte à appliquer aux piliers d'empilement ; mais elle n'est pas obligatoire. Dans le cas de satellites ayant des équipements plus lourds du côté des faces 5 et 7 situées à l'intérieur de la pile de satellites, il n'est pas exclu que le centre de gravité du satellite soit situé à l'extérieur du polygone (triangle) de sustentation défini par les trois piliers d'empilement 30-31. Dans ce cas, la précontrainte devra être adaptée pour compenser ce déséquilibre.

Les murs extérieurs de renfort 33, 34 présentent une hauteur (dimension selon la direction longitudinale) inférieure ou égale à celle des piliers d'empilement 30 à 32. Si la hauteur de murs de renfort est inférieure à celle des piliers d'empilement, les murs de renfort ont essentiellement pour fonction de rigidifier les piliers d'empilement et l'empilement face aux efforts de cisaillement auxquelles ils sont soumis et qui tendent à les déformer transversalement.

Si la hauteur de murs de renfort est égale à celle des piliers d'empilement, les murs de renfort servent non seulement à rigidifier les piliers et l'empilement face aux efforts de cisaillement mais aussi à reprendre le poids des satellites situés au-dessus et à rigidifier les piliers et l'empilement vis-à-vis d'efforts longitudinaux. Cette variante est toutefois moins intéressante car elle conduit à un empilement hyperstatique.

Selon l'invention, le premier pilier d'extrémité 30 est un demi-poteau (ci-après dit premier demi-poteau d'extrémité 30), et le second pilier d'extrémité 31 est aussi un demi-poteau (ci-après dit second demi-poteau d'extrémité 31), dont la section transversale est complémentaire de celle du premier demi-poteau d'extrémité 30. En revanche, le pilier d'empilement intermédiaire 32 est un poteau complet (ci-après dit poteau complet intermédiaire 32).

Dans les exemples illustrés, le poteau complet intermédiaire 32 est un cylindre creux de section circulaire. Le poteau pourrait avoir une autre forme (par exemple une section carrée) et/ou ne pas être creux.

De façon similaire, dans les exemples illustrés, les premier et second demi-poteaux d'extrémité sont constitués d'une coquille creuse cylindrique, c'est-à-dire d'une portion de tube (par opposition à une portion de cylindre plein), ici de section circulaire. Les demi-poteaux pourraient avoir une autre forme ou ne pas être creux.

Dans un empilement selon l'invention, quelle que soit la configuration considérée, le premier demi-poteau d'extrémité 30 d'un premier satellite de l'empilement est accolé au second demi-poteau d'extrémité 31 d'un deuxième satellite du même étage. Les premier et deuxième satellites, qui sont ainsi en contact par leur demi-poteau d'extrémité sont dits satellites adjacents. Les demi-poteaux en question sont liés l'un à l'autre par au moins un dispositif d'accouplement 40, de sorte qu'ils forment un poteau 35 partagé par les deux satellites adjacents. Dans les exemples illustrés, les demi-poteaux sont des portions de tube de section circulaire. Lorsqu'ils sont accouplés, ils forment un poteau complet partagé 35 tubulaire de section circulaire.

Par ailleurs, le second demi-poteau d'extrémité 31 du premier satellite est accolé au premier demi-poteau d'extrémité 30 d'un troisième satellite du même étage. Les demi-poteaux en question sont également liés l'un à l'autre par au moins un dispositif d'accouplement 40 pour former un poteau 35 partagé par les deuxième et troisième satellites, également dits satellites adjacents.

De plus, l'extrémité supérieure 36 de chacun des trois piliers d'empilement 30 à 32 du premier satellite est reliée à l'extrémité inférieure d'un pilier d'un quatrième satellite, situé à l'étage du dessus (sauf, bien entendu, si le premier satellite en question est situé au dernier étage de la pile). De même, l'extrémité inférieure 37 de chacun des piliers d'empilement 30-32 du premier satellite est reliée à l'extrémité supérieure d'un pilier d'un cinquième satellite, situé à l'étage du dessous (sauf, bien entendu, si le premier satellite en question est situé au premier étage de la pile).

Dans les exemples non limitatifs illustrés, les demi-poteaux d'extrémité 30 et 31 sont des portions de cylindre creux de section circulaire. Afin de permettre d'assembler et d'empiler les satellites aussi bien dans la configuration à trois satellites par étage que dans la configuration à quatre satellites par étages précédemment décrites, les demi-poteaux d'extrémité sont des portions de cylindre dont la section transversale est un arc de cercle d'angle inférieur à 165°, ouvert vers l'extérieur de la structure-support. De préférence, l'angle de cet arc de cercle est compris entre 150° et 165°.

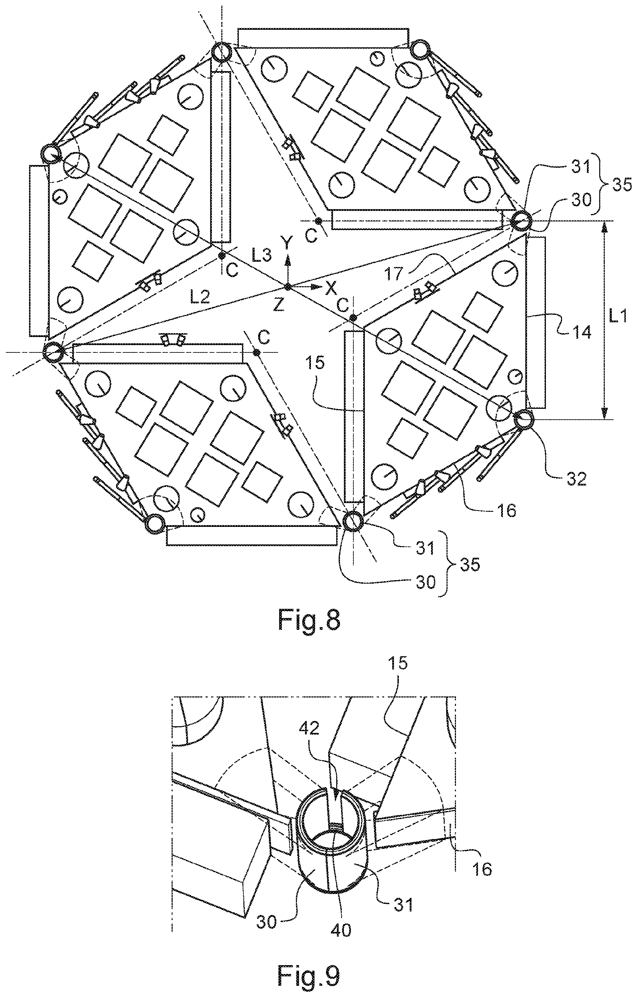

Il en résulte que, dans la configuration d'empilement à trois satellites par étages, lorsque les deux demi-poteaux d'extrémité 30 et 31 de deux satellites adjacents sont assemblés, une fente externe 41 apparaît à la jonction entre les deux demi-poteaux (voir fig. 3), tandis qu'une fente interne 42 apparaît à la jonction entre les deux demi-poteaux 30, 31 des satellites adjacents dans la configuration à quatre satellites par étage (voir fig. 9). Par ailleurs, l'angle entre les panneaux latéraux successifs de deux satellites adjacents au niveau du poteau partagé 35 est de 120° dans la configuration à trois satellites par étage, tandis qu'il est de 150° dans la configuration à quatre satellites par étage.

Comme indiqué précédemment, les demi-poteaux 30, 31 de deux satellites adjacents (sur un même étage) sont liés entre eux par la combinaison d'un dispositif d'accouplement 40 et de la force de précontrainte.

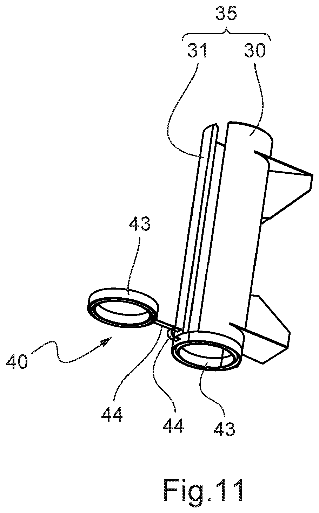

La figure 11 montre un exemple de dispositif d'accouplement 40 pouvant être utilisé avec des demi-poteaux circulaires tubulaires tels ceux illustrés.

Le dispositif d'accouplement 40 comprend d'une part une bague 43 et d'autre part une lame flexible 44 qui constitue un organe de liaison rattachant de façon permanente la bague 43 à l'un des demi-poteaux (en l'exemple le demi-poteau 31). La bague et l'organe de liaison sont représentés deux fois sur la figure 11, dans deux positions différentes : en position d'accouplement des demi-poteaux et en position de largage permettant une libération des demi-poteaux et une séparation des satellites. Bien entendu, le dispositif d'accouplement ne comprend qu'une seule bague et un seul organe de liaison qui ne peuvent être que dans une position à la fois.

La bague 43 présente un diamètre externe et un diamètre interne sensiblement égaux respectivement aux diamètres interne et externe du poteau portagé tubulaire 35.

La bague peut être plane. Les extrémités des demi-poteaux reposent alors simplement sur ladite bague et c'est la friction exercée par la bague sous l'effet de la précontrainte longitudinale qui empêchent les demi-poteaux de s'écarter ou se décaler transversalement l'un de l'autre.

En variante, comme illustré, la bague comprend avantageusement une rainure (elle présente par exemple une section transversale en U) dans laquelle s'insèrent les extrémités tubulaires des demi-poteaux et ce sont les rebords de cette rainure qui empêchent les demi-poteaux de s'écarter ou de se décaler l'un de l'autre transversalement, la précontrainte longitudinale contribuant de plus à maintenir les extrémités des demi-poteaux dans la rainure.

Dans l'exemple illustré, la bague comprend en fait deux rainures, à savoir une rainure sur chacune de ses faces frontales, c'est-à-dire qu'elle présente une section transversale en H. Ainsi elle permet si nécessaire d'accoupler quatre demi-poteaux (et quatre satellites) : la rainure située sur la face supérieure de la bague accueille l'extrémité inférieure de deux demi-poteaux appartenant à deux satellites adjacents d'un étage donné, et la rainure située sur la face inférieure de la bague accueille les extrémités supérieures de deux demi-poteaux appartenant à deux satellites adjacents de l'étage du dessous.

De préférence, comme illustré, les poteaux intermédiaires (complets) des satellites sont eux-aussi constitués d'une coquille (creuse) cylindrique de section circulaire, ayant des diamètres externe et interne identiques respectivement à ceux des demi-poteaux et de la bague 43. Ainsi la bague peut aussi permettre d'accoupler, non pas quatre demi-poteaux (soit quatre satellites), mais deux demi-poteaux et un poteau complet, soit trois satellites : comme précédemment expliqué, la rainure supérieure ou plus généralement la face supérieure (si celle-ci est plane) accueille les deux demi-poteaux 30 et 31 de deux satellites adjacents d'un étage donné, tandis que la rainure inférieure, ou plus généralement la face inférieure, de la bague accueille le poteau intermédiaire complet d'un satellite de l'étage du dessous.

On comprendra aisément que le dispositif d'accouplement, présenté ici comme étant agencé à l'extrémité inférieure d'un demi-poteau, pourrait en variante être agencé en partie haute dudit poteau, la bague recevrait alors les extrémités supérieures des demi-poteaux.

L'organe de liaison 44 est ici une simple lame ressort dont une première extrémité est fixée à la bague 43 et dont la seconde extrémité est fixée à la face externe du demi-poteau 31. En position d'accouplement, la lame est pliée (ressort sous pression) et la bague est emboîtée dans les extrémités inférieures des demi-poteaux. En position de libération, la lame est dépliée (ressort libre) et la bague est dégagée des extrémités inférieures des demi-poteaux mais reste attachée au demi-poteau 31. Ainsi, lorsque les satellites sont largués, la bague ne se transforme pas en débris errant dans l'espace.

Bien entendu, l'invention n'est pas limitée à des poteaux intermédiaires de section circulaire, ni à des demi-poteaux de section en arc de cercle. D'autres formes de poteau sont possibles. On préfèrera toutefois des formes de premier et second demi-poteaux d'extrémité qui permettent d'accoupler facilement un premier demi-poteau d'extrémité avec un second demi-poteau d'extrémité à la fois dans une configuration à trois (ou N) satellites par étages et dans une configuration à quatre (ou N+1, voire plus) satellites par étage.

Dans la configuration à trois satellites par étages, Il est possible d'empiler les étages de satellites en superposant les uns sur les autres les poteaux complets intermédiaires 32 des satellites, comme c'est le cas de l'empilement à quatre satellites par étages illustré à la figure 9.

Dans une variante préférée, que l'on peut observer à la figure 6, les étages sont empilés en superposant, en alternance, un poteau complet intermédiaire 32 puis un poteau partagé 35 puis de nouveau un poteau complet intermédiaire 32, et ainsi de suite. En d'autres termes, le poteau complet intermédiaire 32 de chacun des engins spatiaux est relié :
- à son extrémité supérieure, à un poteau partagé 35 de l'assemblage de satellites de l'étage du dessus (sauf, bien entendu, pour les satellites du dernier étage), et
- à son extrémité inférieure, à un poteau partagé 35 de l'assemblage de satellites de l'étage du dessous (sauf, bien entendu, pour les satellites du premier étage).

Autrement dit, dans cette variante de la configuration à trois satellites par étage, on retrouve, d'un étage au suivant, un assemblage de trois satellites identique mais décalé par rotation de 60° autour de l'axe d'empilement.

Dans cette variante, en plus des deux satellites qui lui sont adjacents à son propre étage, chacun des satellites d'un étage intermédiaire est relié à deux satellites de l'étage du dessus et à deux satellites de l'étage du dessous.

Cette variante confère une meilleure stabilité à l'empilement, elle conduit à l'obtention d'un empilement plus isotrope.

Toutefois, comme précédemment indiqué, un empilement dans lequel le poteau intermédiaire 32 de chaque satellite est relié à d'une part au poteau complet intermédiaire 32 du satellite situé immédiatement au-dessus et d'autre part au poteau complet intermédiaire 32 du satellite situé immédiatement en dessous (c'est-à-dire un empilement dans lequel sont formées des lignes de piliers ne comprenant que des poteaux complets intermédiaires 32 ou que des poteaux partagés 35) est également conforme à l'invention. Dans la configuration à quatre satellites par étage, il n'est d'ailleurs pas possible d'alterner poteau intermédiaire 32 et poteaux partagés 35 sur une même ligne de piliers car les poteaux intermédiaires et les demi-poteaux d'extrémités des satellites ne sont pas situés sur un même cylindre. Dans un tel empilement, chaque satellite n'est relié qu'à un seul satellite de l'étage du dessus et un seul satellite de l'étage du dessous en plus des deux satellites qui lui sont adjacents à son propre étage. Un tel empilement est donc constitué de trois (ou quatre) tours de satellites distinctes qui ne sont reliées entre elles que par les dispositifs d'accouplement 40 qui solidarisent les deux demi-poteaux d'extrémité 30, 31 constitutifs des poteaux partagés 35. Dans ce cas, il peut être souhaitable de prévoir pour chaque paire de satellites adjacents, en lieu et place des bagues 43 illustrées (cf. fig. 11), des dispositifs d'accouplement qui relient les demi-poteaux d'extrémité 30, 31 sur toute leur hauteur afin d'obtenir une solidarisation plus rigide des trois (ou quatre) tours.

Un empilement selon l'invention comprend de plus (voir fig. 4) :
- un adaptateur 50 qui assure l'interface entre la pile de satellites et le lanceur ; cet adaptateur peut présenter une forme de cône inversé dont la grande base, orientée vers le haut, offre une surface de réception sur laquelle est posé le premier étage de satellites et dont la petite base repose sur une surface correspondante du lanceur,
- un système de précontrainte 60, comprenant, à chaque ligne de piliers, au moins un tendeur reliant une extrémité supérieure de ladite ligne de piliers à une extrémité inférieure de celle-ci, ainsi qu'un mécanisme de tension dudit tendeur. En l'exemple illustré, deux tendeurs 61 sont prévus à chaque ligne de piliers, de part et d'autre des poteaux complets et/ou partagés de ladite ligne, et le mécanisme de tension comprend un élément supérieur 62a (à l'extrémité supérieure de la ligne de piliers) dans lequel sont ancrées les extrémités supérieures des deux tendeurs 61, et un élément inférieur 62b (à l'extrémité inférieure de la ligne de piliers) auquel sont rattachées les extrémités inférieures des deux tendeurs 61.

L'invention permet, outre les divers avantages évoqués plus haut, d'une part d'augmenter le *payload* et d'autre part de réduire la précontrainte nécessaire pour garantir la stabilité de l'empilement et l'intégrité des satellites et de leurs équipements.

## Revendications

1. Empilement d'engins spatiaux (1, 100) destiné à être intégré dans un lanceur, l'empilement comprenant :
- une pile d'engins spatiaux (1, 100) formée d'une pluralité d'étages superposés selon une direction longitudinale (z), dont un premier étage, un dernier étage et un ou plusieurs étages intermédiaires, chacun des étages comprenant un nombre d'engins spatiaux (1, 100) supérieur ou égal à N, les engins spatiaux de chacun des étages étant directement empilés sur les engins spatiaux de l'étage précédant,
- un adaptateur inférieur (50) adapté pour former une interface entre la pile d'engins spatiaux et le lanceur, les engins spatiaux (1, 100) du premier étage de la pile étant agencés sur cet adaptateur inférieur,
- un système de précontrainte (60) configuré pour exercer une précontrainte longitudinale sur la pile d'engins spatiaux,
- chacun des engins spatiaux comprenant
- une structure-support, comprenant des panneaux (12, 13, 14, 15, 16, 17),
- trois piliers d'empilement (30, 31, 32) ayant chacun un axe s'étendant selon la direction longitudinale et disposés à la périphérie de la structure-support, les engins spatiaux étant agencés dans la pile de façon à ce que leurs piliers d'empilement forment des lignes de piliers s'étendant de façon continue du premier au dernier étage de la pile,
dans lequel, pour chacun des engins spatiaux de l'empilement :
- le cylindre circulaire qui passe par les axes des trois piliers d'empilement (30-32) dudit engin spatial présente un diamètre d_{N} qui est le même pour tous les engins spatiaux de l'empilement,
- ledit engin spatial est dépourvu de piliers d'empilement à l'intérieur de ce cylindre de diamètre d_{N}, ledit engin spatial s'inscrivant par ailleurs dans un secteur angulaire dudit cylindre de diamètre d_{N} d'angle égal à 360°/N,
- les piliers d'empilement dudit engin spatial comprennent :
- un premier demi-poteau d'extrémité (30) et un second demi-poteau d'extrémité (31), espacés de 360°/N l'un de l'autre dans un repère centré sur l'axe du cylindre de diamètre d_{N}, chacun des premier et second demi-poteaux d'extrémité ayant une hauteur supérieure ou égale à celle de la structure support et des sections transversales incomplètes et complémentaires permettant l'assemblage du premier demi-poteau (30) dudit engin spatial avec le second demi-poteau d'un autre des engins spatiaux de l'empilement situé sur un même étage que ledit engin spatial, pour former un poteau complet (35) ci-après dit poteau partagé,
- un poteau complet, dit poteau intermédiaire (32), situé entre les premier et second demi-poteaux d'extrémité (30, 31),
- ledit engin spatial comprend un dispositif d'accouplement (40) permettant d'accoupler l'un des premier et second demi-poteaux d'extrémité (30) dudit engin spatial avec l'autre des premier et second demi-poteaux d'extrémité (31) d'un autre des engins spatiaux de l'empilement pour former un poteau partagé (35).

2. Empilement selon la revendication 1, dans lequel, pour chacun des engins spatiaux,
- les premier et second demi-poteaux d'extrémité (30, 31) présentent des sections transversales en arcs de cercle ouvertes vers l'extérieur de la structure-support,
- le dispositif d'accouplement (40) comprend
- une bague (43) de section circulaire recevant une extrémité inférieure ou supérieure des deux demi-poteaux accouplés, et
- un organe de liaison (44) entre ladite bague (43) et l'un desdits demi-poteaux d'extrémité (31), l'organe de liaison autorisant alternativement l'assemblage de l'extrémité supérieure ou inférieure des deux demi-poteaux d'extrémité avec la bague et la libération desdites extrémités hors de la bague, la bague restant constamment attachée audit demi-poteau (31) par ledit organe de liaison.

3. Empilement selon l'une des revendications 1 ou 2, dans lequel chacune des lignes de piliers est constituée soit uniquement de poteaux intermédiaires (32), soit uniquement de poteaux partagés (35), soit d'une alternance de poteaux intermédiaires (32) et de poteaux partagés (35).

4. Empilement selon l'une des revendications 1 à 3, dans lequel la structure-support (12-17) d'au moins l'un des engins spatiaux présente une section transversale en forme de losange.

5. Empilement selon l'une des revendications 1 à 4, dans lequel la structure-support d'au moins l'un des engins spatiaux comprend un mur extérieur de renfort (33, 34) entre le poteau intermédiaire (32) et chacun des demi-poteaux d'extrémité (30, 31), lesquels murs extérieurs de renfort présentent une hauteur inférieure à la hauteur desdits poteau et demi-poteaux (30-32).

6. Empilement selon l'une des revendications 1 à 5, dans lequel au moins l'un des engins spatiaux présente un centre de gravité excentré, situé, selon une vue en coupe transversale, à l'intérieur d'un triangle dont les sommets correspondent aux axes des trois piliers d'empilement (30-32) dudit engin spatial.

7. Empilement selon l'une des revendications 1 à 6, dans lequel les premier et second demi-poteaux d'extrémité (30, 31) des engins spatiaux de l'empilement présentent des sections transversales respectives telles que le poteau partagé, que forment le premier demi-poteau de l'un des engins spatiaux assemblé au second demi-poteau d'un autre des engins spatiaux dans une configuration d'empilement à N engins spatiaux par étage, présente une section transversale en forme d'arc de cercle laissant un secteur angulaire libre pour permettre aussi une configuration à N+1 engins spatiaux par étage.

8. Empilement selon la revendication 7, dans lequel, les premier et second demi-poteaux d'extrémité (30, 31) de chacun des engins spatiaux présentent une section en arc de cercle d'angle inférieur à 165°, ouverte vers l'extérieur de la structure-support.

9. Empilement selon l'une des revendications 1 à 8, dans lequel N est égal à 3 et l'empilement comprend trois engins spatiaux par étage.

10. Empilement selon l'une des revendications 1 à 8, dans lequel N est égal à 3 et l'empilement comprend quatre engins spatiaux par étage.

## Patentansprüche

1. Raumfahrzeugstapelung (1, 100), der zur Integration in eine Startrakete bestimmt ist, wobei die Stapelung Folgendes umfasst:
- einen Raumfahrzeugstapel (1, 100), der aus einer Vielzahl von in Längsrichtung (z) übereinander liegenden Ebenen gebildet ist, darunter eine erste Ebene, eine letzte Ebene und eine oder mehrere Zwischenebenen, wobei jede der Ebenen eine Anzahl von Raumfahrzeugen (1, 100) größer oder gleich N umfasst, wobei die Raumfahrzeuge jeder der Ebenen direkt auf den Raumfahrzeugen der vorhergehenden Ebene gestapelt sind,
- einen unteren Adapter (50), der dazu ausgelegt ist, eine Schnittstelle zwischen dem Raumfahrzeugstapel und der Startrakete zu bilden, wobei die Raumfahrzeuge (1, 100) der ersten Ebene des Stapels an diesem unteren Adapter angeordnet sind,
- ein Vorspannsystem (60), das so eingerichtet ist, dass es eine Längsvorspannung auf den Raumfahrzeugstapel ausübt,
- wobei jedes der Raumfahrzeuge Folgendes umfasst:
- wobei eine Trägerstruktur die Platten (12, 13, 14, 15, 16, 17) umfasst,
- drei Stapelungspfeiler (30, 31, 32), die jeweils eine Achse aufweisen, die sich in Längsrichtung erstreckt und an dem Umfang der Trägerstruktur angeordnet sind, wobei die Raumfahrzeuge in dem Stapel so angeordnet sind, dass ihre Stapelungspfeiler Pfeilerlinien bilden, die sich kontinuierlich von der ersten bis zur letzten Ebene des Stapels erstrecken,
wobei für jedes der Raumfahrzeuge der Stapelung:
- der kreisförmige Zylinder, der durch die Achsen der drei Stapelungspfeiler (30-32) des Raumfahrzeugs verläuft, einen Durchmesser d_{N} besitzt, der für alle Raumfahrzeuge der Stapelung gleich ist,
- das Raumfahrzeug innerhalb dieses Zylinders mit Durchmesser d_{N} keine Stapelungspfeiler aufweist, wobei das Raumfahrzeug im Übrigen in einen Winkelbereich des Zylinders mit Durchmesser d_{N} mit einem Winkel von 360°/N fällt, - wobei die Stapelungspfeiler des Raumfahrzeugs Folgendes umfassen:
- einen ersten Endhalbpfosten (30) und einen zweiten Endhalbpfosten (31), die in einem Abstand von 360°/N zueinander in einer auf der Zylinderachse mit Durchmesser d_{N} zentrierten Markierung angeordnet sind, wobei jeder der ersten und zweiten Endhalbpfosten eine Höhe aufweist, die größer oder gleich der Höhe der Trägerstruktur ist, und unvollständige und ergänzende Querschnitte, die die Montage des ersten Halbpfostens (30) des Raumfahrzeugs mit dem zweiten Halbpfosten eines anderen der Raumfahrzeuge der Stapelung ermöglichen, der sich auf derselben Ebene wie das Raumfahrzeug befindet, um einen vollständigen Pfosten (35) zu bilden, der nachfolgend als geteilter Pfosten bezeichnet wird,
- einen kompletten Pfosten, den Zwischenpfosten (32), der sich zwischen dem ersten und dem zweiten Endhalbpfosten (30, 31) befindet,
- das Raumfahrzeug umfasst eine Kopplungsvorrichtung (40), mit der einer der ersten und zweiten Endhalbpfosten (30) des Raumfahrzeugs mit dem anderen der ersten und zweiten Endhalbpfosten (31) eines anderen Raumfahrzeugs der Stapelung gekoppelt werden kann, um einen geteilten Pfosten (35) zu bilden.

2. Stapelung nach Anspruch 1, wobei für jedes der Raumfahrzeuge
- die ersten und zweiten Endhalbpfosten (30, 31) kreisbogenförmige Querschnitte besitzen, die nach außen der Trägerstruktur offen sind,
- die Kopplungseinrichtung (40) Folgendes umfasst:
- einen Ring (43) mit kreisförmigem Querschnitt, der ein unteres oder oberes Ende der beiden gekoppelten Halbpfosten aufnimmt, und
- ein Verbindungselement (44) zwischen dem Ring (43) und einem der Endhalbpfosten (31), wobei das Verbindungselement abwechselnd die Verbindung des oberen oder unteren Endes der beiden Endhalbpfosten mit dem Ring und die Freigabe der Enden aus dem Ring ermöglicht, wobei der Ring ständig an dem Endhalbpfosten (31) durch das Verbindungselement befestigt bleibt.

3. Stapelung nach einem der Ansprüche 1 oder 2, wobei jede der Pfeilerlinien entweder nur aus Zwischenpfosten (32) oder nur aus geteilten Pfosten (35) oder aus einem Wechsel von Zwischenpfosten (32) und geteilten Pfosten (35) besteht.

4. Stapelung nach einem der Ansprüche 1 bis 3, wobei die Trägerstruktur (12-17) mindestens eines der Raumfahrzeuge einen rautenförmigen Querschnitt besitzt.

5. Stapelung nach einem der Ansprüche 1 bis 4, wobei die Trägerstruktur mindestens eines der Raumfahrzeuge eine Verstärkungsaußenwand (33, 34) zwischen dem Zwischenpfosten (32) und jedem der Endhalbpfosten (30, 31) umfasst, wobei die Verstärkungsaußenwände eine Höhe besitzen, die niedriger ist als die Höhe der Pfosten und Halbpfosten (30-32).

6. Stapelung nach einem der Ansprüche 1 bis 5, wobei mindestens eines der Raumfahrzeuge einen außermittigen Schwerpunkt besitzt, der sich nach einer Querschnittsansicht innerhalb eines Dreiecks befindet, dessen Gipfel den Achsen der drei Stapelungspfeiler (30-32) des Raumfahrzeugs entsprechen.

7. Stapelung nach einem der Ansprüche 1 bis 6, wobei die ersten und zweiten Endhalbpfosten (30, 31) der Raumfahrzeuge der Stapelung jeweilige Querschnitte wie den geteilten Pfosten aufweisen, die den ersten Halbpfosten eines der Raumfahrzeuge bilden, der an den zweiten Halbpfosten eines anderen der Raumfahrzeuge in einer Stapelkonfiguration mit N Raumfahrzeugen pro Ebene montiert ist, hat einen kreisbogenförmigen Querschnitt, der einen freien Winkelbereich lässt, um auch eine Konfiguration mit N+1 Raumfahrzeugen pro Ebene zu ermöglichen.

8. Stapelung nach Anspruch 7, wobei der erste und zweite Endhalbpfosten (30, 31) jedes der Raumfahrzeuge einen Winkelkreisbogenquerschnitt von weniger als 165° besitzen, der nach außen zu der Trägerstruktur geöffnet ist.

9. Stapelung nach einem der Ansprüche 1 bis 8, wobei N gleich 3 ist und die Stapelung drei Raumfahrzeuge pro Ebene umfasst.

10. Stapelung nach einem der Ansprüche 1 bis 8, wobei N gleich 3 ist und die Stapelung vier Raumfahrzeuge pro Ebene umfasst.

## Claims

1. Stack of spacecrafts (1, 100) intended to be integrated into a launcher, the stack comprising:
- a stack of spacecrafts (1, 100) formed of a plurality of stages superimposed along a longitudinal direction (z), including a first stage, a last stage and one or more intermediate stages, each of the stages comprising a number of spacecrafts (1, 100) greater than or equal to N, the spacecrafts of each of the stages being directly stacked on the spacecrafts of the preceding stage,
- a bottom adapter (50) adapted to form an interface between the stack of spacecrafts and the launcher, the spacecrafts (1, 100) of the first stage of the stack being arranged on this bottom adapter,
- a prestressing system (60) configured to exert a longitudinal prestress on the stack of spacecrafts,
- each of the spacecrafts comprising
- a support structure, comprising panels (12, 13, 14, 15, 16, 17),
- three stacking pillars (30, 31, 32) each having an axis extending along the longitudinal direction and arranged at the periphery of the support structure, the spacecrafts being arranged in the stack so that their stacking pillars form lines of pillars extending continuously from the first to the last stage of the stack,
wherein, for each of the spacecrafts in the stack:
- the circular cylinder that passes through the axes of the three stacking pillars (30-32) of said spacecraft has a diameter d_{N} that is the same for all spacecraft in the stack,
- said spacecraft is devoid of stacking pillars inside this cylinder with a diameter of d_{N}, said spacecraft also fitting into an angular sector of said cylinder with a diameter of d_{N} with an angle equal to 360°/N, - the stacking pillars of said spacecraft comprise:
- a first end half-post (30) and a second end half-post (31), spaced 360°/N apart from each other in a reference frame centered on the axis of the cylinder with a diameter of d_{N}, each of the first and second end half-posts having a height greater than or equal to that of the support structure and incomplete and complementary cross-sections allowing the assembly of the first half-post (30) of said spacecraft with the second half-post of another of the spacecrafts in the stack located on the same stage as said spacecraft, to form a complete post (35), hereinafter referred to as shared post,
- a complete post, referred to as intermediate post (32), located between the first and second end half-posts (30, 31),
- said spacecraft comprises a coupling device (40) for coupling one of the first and second end half-posts (30) of said spacecraft with the other of the first and second end half-posts (31) of another of the spacecrafts in the stack to form a shared post (35).

2. Stack according to claim 1, wherein, for each of the spacecrafts,
- the first and second end half-posts (30, 31) have cross-sections in arcs of a circle open to the outside of the support structure,
- the coupling device (40) comprises
- a ring (43) with a circular cross-section receiving a bottom or top end of the two coupled half-posts, and
- a connecting member (44) between said ring (43) and one of said end half-posts (31), the connecting member alternately allowing the assembly of the top or bottom end of the two end half-posts with the ring and the release of said ends out of the ring, the ring remaining constantly attached to said half-post (31) by said connecting member.

3. Stack according to one of claims 1 or 2, wherein each of the lines of pillars consists either only of intermediate posts (32), or only of shared posts (35), or of an alternation of intermediate posts (32) and shared posts (35).

4. Stack according to one of claims 1 to 3, wherein the support structure (12-17) of at least one of the spacecrafts has a diamond-shaped cross-section.

5. Stack according to one of claims 1 to 4, wherein the support structure of at least one of the spacecrafts comprises a reinforcement outer wall (33, 34) between the intermediate post (32) and each of the end half-posts (30, 31), said reinforcement outer walls having a height less than the height of said post and half-posts (30-32).

6. Stack according to one of claims 1 to 5, wherein at least one of the spacecrafts has an eccentric center of gravity, located, according to a cross-sectional view, inside a triangle the vertices of which correspond to the axes of the three stacking pillars (30-32) of said spacecraft.

7. Stack according to one of claims 1 to 6, wherein the first and second end half-posts (30, 31) of the spacecrafts in the stack have respective cross-sections such that the shared post, formed by the first half-post of one of the spacecrafts assembled to the second half-post of another of the spacecrafts in a stacking configuration of N spacecrafts per stage, has a cross-section in the form of an arc of a circle leaving a free angular sector to also allow a configuration of N+1 spacecrafts per stage.

8. Stack according to claim 7, wherein the first and second end half-posts (30, 31) of each of the spacecrafts have a cross-section in an arc of a circle with an angle of less than 165°, open to the outside of the support structure.

9. Stack according to one of claims 1 to 8, wherein N is equal to 3 and the stack comprises three spacecrafts per stage.

10. Stack according to one of claims 1 to 8, wherein N is equal to 3 and the stack comprises four spacecrafts per stage.
